# FASCICULE DE BREVET EUROPEEN

(11) **EP 3 638 482 B1**
(45) Date de publication et mention de la délivrance du brevet: **16.03.2022**
(21) Numéro de dépôt: 18737334.5
(22) Date de dépôt: 01.06.2018
(51) Int. Cl.: B29C 45/17

(54) **PROCÉDÉ DE SOLIDARISATION OU DÉSOLIDARISATION DE DEUX PARTIES D'UN MOULE D'INJECTION DE MATIÈRE PLASTIQUE ET MOULE**
VERFAHREN ZUM BEFESTIGEN ODER TRENNEN VON ZWEI TEILEN EINER SPRITZGUSSFORM FÜR KUNSTSTOFFE UND SPRITZGUSSFORM
METHOD FOR SECURING OR DISCONNECTING TWO PARTS OF AN INJECTION MOULD FOR A PLASTICS MATERIAL AND MOULD

(30) Priorité: 13.06.2017 FR 1755270
(43) Date de publication de la demande: 22.04.2020
(73) Titulaire: PSA Automobiles SA, 78300 Poissy (FR)
(72) Inventeur: DUFLOUX, Mario, 08230 Sevigny la Foret (FR)
(86) Numéro de dépôt international: PCT/FR2018/051268
(87) Numéro de publication internationale: WO 2018/229382

(56) Documents cités:
- FR-A1- 2 342 831
- US-A- 5 249 880

## Description

La présente invention concerne un procédé de solidarisation ou désolidarisation de deux parties d'un moule d'injection de matière plastique avec au moins un mécanisme de verrouillage traversant les deux parties du moule.

Plus particulièrement, sans que cela soit limitatif, la présente invention concerne un ou des moules d'injection de strates composant un modèle en matière plastique relativement dure, par exemple en polystyrène, connu sous l'abréviation de PSE pour polystyrène expansé.

Un ou de tels moules sont reliés de manière amovible à une machine d'injection de matière plastique, la matière plastique étant injectée dans les empreintes de chaque moule par une série d'injecteurs spécifiques à une fonction, l'injection de la matière plastique pouvant se faire fréquemment sous un flux d'air.

Il est connu qu'un moule d'injection de matière plastique soit composé de deux parties, une partie étant mobile par rapport à une partie fixe, avec au moins un mécanisme de verrouillage.

Les parties fixe et mobile formant un moule sont sous la forme de plaques verticales. Ces parties fixe et mobile ne peuvent être déplacées qu'à la verticale et par élingage au pont, ceci en raison de l'équipement embarqué sur les moules, par exemple les injecteurs, les platines de liaison des injecteurs et les tuyauterie des injecteurs, notamment pour la commande d'ouverture et fermeture des injecteurs et l'approvisionnement en matière plastique sous un flux d'air. Le document FR 2 342 831 A1 divulgue un moule d'injection de matière plastique en deux parties avec une partie mobile par rapport à une partie fixe le moule présentant au mains un mécanisme de verrouillage et de déverrouillage, ledit au mains un mécanisme présente un arbre de verrouillage traversant la partie mobile en direction de la partie fixe, l'arbre de verrouillage étant associe à des moyens de translation et de rotation portes par la partie mobile.

Le système actuel selon l'état de la technique le plus proche permet de garder les moules fermés pendant leur transport, c'est-à-dire avec les parties fixe et mobile solidarisées l'une à l'autre, par exemple lors d'un changement de moules. Ce système est composé de deux targettes rabattables.

Avant de procéder à l'ouverture du moule et après l'avoir rendu solidaire de la machine d'injection, il convient de déconnecter les targettes de sécurité en position de fermeture du moule. Ces targettes sont difficilement accessibles après la mise en place du moule dans la machine d'injection et nécessitent l'emploi d'une clef pour desserrage et serrage de vis de fixation.

Ceci entraîne des opérations fastidieuses et aussi dangereuses pour l'opérateur. Le système selon l'état de la technique n'est pas adapté aux changements de moules devant être effectués rapidement. En effet, lorsque le moule est relié à la machine d'injection, l'accès aux taquets de verrouillage est très difficile et complique la tâche des opérateurs, ce qui se traduit par un temps additionnel lors de l'opération de changement de moule.

Par conséquent, le problème à la base de la présente invention, est de réaliser un moule en deux parties et un procédé de solidarisation de deux parties d'un moule d'injection de matière plastique par au moins un mécanisme de verrouillage traversant les deux parties du moule qui soit facile de mise en oeuvre aussi bien lors de la solidarisation que de la désolidarisation du moule d'injection tout en étant résistant et précis en position.

Pour atteindre cet objectif, il est prévu selon l'invention un moule en deux parties avec une partie mobile par rapport à une partie fixe, le moule présentant au moins un mécanisme de verrouillage et de déverrouillage, caractérisé en ce que ledit au moins un mécanisme présente un arbre de verrouillage traversant la partie mobile en direction de la partie fixe, l'arbre de verrouillage étant associé à des moyens de translation et de rotation portés par la partie mobile, la partie fixe portant un axe fixe coaxial à l'arbre en pénétrant partiellement dans ou en recevant en son intérieur une extrémité de l'arbre en position de verrouillage des deux parties, l'axe ou l'arbre portant des moyens de verrouillage coopérant avec des moyens de verrouillage complémentaires portés par l'arbre ou l'axe, la partie mobile portant un moyeu de blocage portant des moyens amovibles de blocage en translation et en rotation de l'arbre, les moyens amovibles de blocage en translation du moyeu de blocage étant sous la forme d'une clé amovible pénétrant transversalement dans le moyeu de blocage et entourant une portion de l'arbre.

Les avantages par rapport aux anciens taquets de verrouillage utilisés par l'état de la technique concernent la sécurité pour les opérateurs et pour les outillages qui, avec le moule selon la présente invention, bénéficient d'un verrouillage sécurisé, utile notamment lors du transport des moules. Il est aussi obtenu une facilité d'accès lors des changements de moules, avec un accès au(x) mécanisme(s) de verrouillage beaucoup plus aisé que dans l'ancienne configuration.

D'autres avantages concernent la rapidité et la simplicité. Lors des manœuvres de verrouillage et de déverrouillage, il n'est nécessité qu'une action simplifiée pour l'opérateur, sans emploi de clé ou d'outil spécifique. Un gain de temps est obtenu lors des changements de moules, étant donné que la présente invention ne nécessite pas l'emploi d'outillage externe au mécanisme pour sa manœuvre.

La tâche de l'opérateur est facilitée car le mécanisme de verrouillage est implanté sur une face de la partie mobile libre d'accès dans une zone accessible et dépourvue d'accessoires comme les injecteurs, les platines de raccordement etc., que l'on trouve généralement sur la face de la partie fixe faisant face à la machine d'injection.

Avantageusement, les moyens de verrouillage portés par l'axe ou l'arbre sont sous la forme d'un téton s'étendant radialement à l'axe ou l'arbre pénétrant soit dans une encoche borgne en position de verrouillage ou soit dans une lumière débouchante vers l'extrémité de l'arbre ou l'axe lors de la translation en rapprochement de l'arbre, l'encoche et la lumière formant les moyens de verrouillage complémentaires.

Avantageusement, la lumière et l'encoche sont reliées entre elles par un passage permettant une rotation de l'arbre en fin de translation en rapprochement de l'arbre par rapport à l'axe.

Avantageusement, la lumière et l'encoche sont portées par un manchon de plus grand diamètre que l'arbre ou l'axe le portant, l'axe ou l'arbre portant le téton présentant une couronne de plus grand diamètre venant en appui sur la face de la partie fixe en vis-à-vis de la partie mobile, pour permettre sa fixation à l'aide d'une plaquette de renfort et d'un écrou.

Avantageusement, la clé amovible présente deux branches parallèles pénétrant latéralement dans le moyeu de blocage en entourant l'arbre, les extrémités libres des branches parallèles recevant une goupille de sécurité en position montée de la clé amovible dans le moyeu de blocage, la goupille de sécurité faisant butée contre une extraction de la clé amovible hors du moyeu de blocage.

Avantageusement, les moyens de blocage en rotation de l'arbre sont sous la forme d'une goupille traversant l'arbre, les deux extrémités de la goupille étant reçues dans un logement radial respectif prévu dans le moyeu de blocage, chaque extrémité de la goupille traversant l'arbre étant en butée contre les parois du logement associé lors d'une rotation de l'arbre, le moyeu de blocage présentant quatre logements associées deux à deux pour les positions de verrouillage et de déverrouillage.

Avantageusement, la rotation et la translation de l'arbre sont réalisées par des moyens pneumatiques, par au moins un moteur électrique ou manuellement, et, quand la rotation et la translation de l'arbre sont réalisées manuellement, une extrémité de l'arbre dépassant de la partie mobile sur une face opposée à la face de la partie mobile orientée vers la partie fixe porte un volant tourné par un opérateur pour initier une rotation ou tiré ou poussé par l'opérateur pour une translation de l'arbre en éloignement ou en rapprochement de l'axe.

L'invention porte aussi sur un procédé de solidarisation ou désolidarisation de deux parties d'un tel moule d'injection de matière plastique, une partie étant mobile par rapport à une partie fixe, avec au moins un mécanisme de verrouillage comprenant un arbre de verrouillage porté par la partie mobile, l'arbre étant mobile en rotation sur lui-même et en translation en rapprochement ou en éloignement d'un axe de verrouillage fixe porté par la partie fixe, l'arbre et l'axe étant coaxiaux, avec insertion d'une extrémité de l'arbre ou de l'axe dans respectivement une extrémité en vis-à-vis de l'axe ou l'arbre lors de la translation en rapprochement, la rotation de l'arbre s'effectuant entre une position de verrouillage dans laquelle une translation en éloignement est limitée pour empêcher une désolidarisation de l'arbre et de l'axe et une position de déverrouillage dans laquelle une translation en éloignement provoque la désolidarisation de l'arbre, un blocage en translation de l'arbre s'effectuant sur la partie mobile.

L'invention porte sur un nouveau mécanisme de verrouillage des moules, garantissant la sécurité de fermeture pendant l'élingage et favorisant l'accès de l'opérateur lors des changements de moules. La présente invention permet d'agir sur le système de verrouillage pratiquement sans outil et offre un visuel clair sur la position verrouillée ou déverrouillée du moule. Le verrouillage garantit la sécurité de fermeture du moule, tant pour le moule que pour l'opérateur, par exemple lors de possibles manipulations au pont.

Avantageusement, en partant d'un blocage en rotation et en translation de l'arbre dans une position respectivement de verrouillage ou de déverrouillage, pour un déverrouillage, il est effectué un déblocage en translation de l'arbre sur la partie mobile, une translation de l'arbre en éloignement de l'axe jusqu'à ce qu'une rotation de l'arbre soit permise, cette rotation de l'arbre s'effectuant vers une position de déverrouillage et une translation de l'arbre en éloignement de l'axe, l'arbre étant désolidarisé de l'axe et un blocage en translation de l'arbre sur la partie mobile étant effectué et, pour un verrouillage, il est effectué un déblocage en translation de l'arbre sur la partie mobile, une translation en rapprochement de l'arbre vers l'axe avec introduction d'une portion d'extrémité de l'arbre ou de l'axe respectivement dans l'axe ou l'arbre jusqu'à ce qu'une rotation de l'arbre soit permise, une rotation de l'arbre vers une position de verrouillage et une translation limitée de l'arbre en éloignement de l'axe étant alors effectuées, l'arbre étant verrouillé sur l'axe et un blocage en translation et en rotation de l'arbre sur la partie mobile étant effectué.

D'autres caractéristiques, buts et avantages de la présente invention apparaîtront à la lecture de la description détaillée qui va suivre et au regard des dessins annexés donnés à titre d'exemples non limitatifs et sur lesquels :

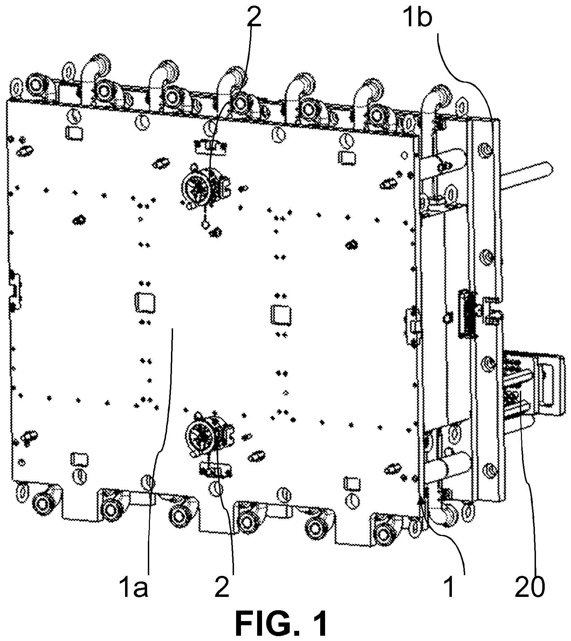

- la figure 1 est une représentation schématique d'une vue en perspective d'un moule comportant des parties mobile et fixe solidarisées de manière amovible par deux mécanismes de verrouillage, le moule étant conforme à la présente invention,

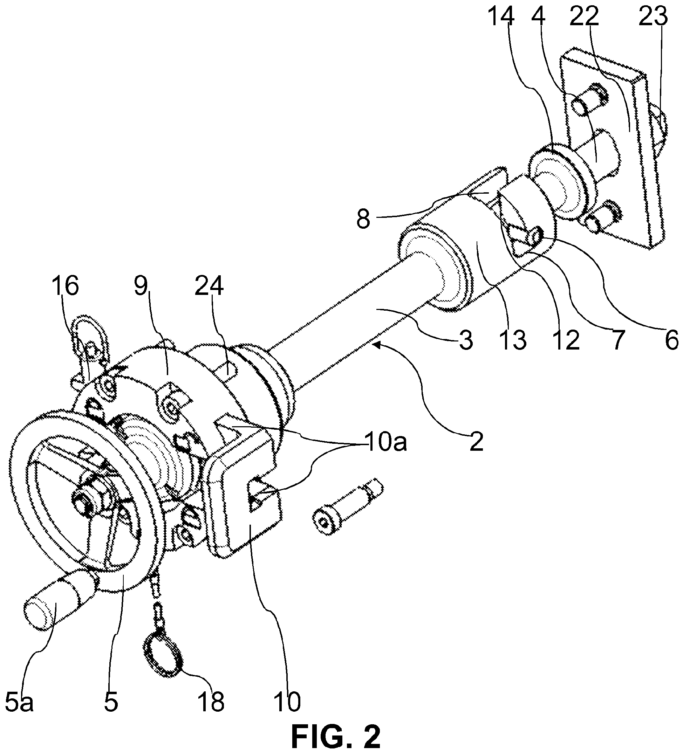

- la figure 2 est une représentation schématique d'une vue en perspective d'un mécanisme de verrouillage faisant partie d'un moule selon un mode de réalisation de la présente invention, ledit au moins un mécanisme de verrouillage comprenant un arbre mobile en rotation et en translation porté par la partie mobile du moule coopérant avec un axe fixe porté par la partie fixe du moule et étant montré isolément des parties fixe et mobile du moule,

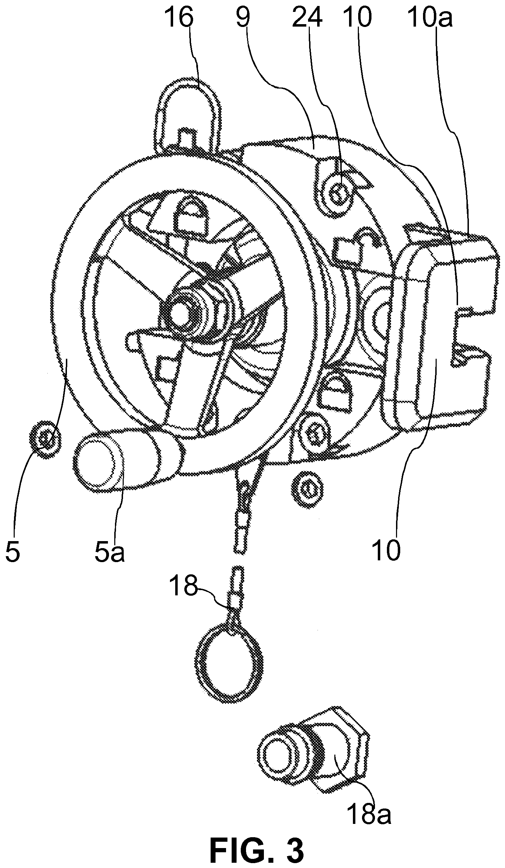

- la figure 3 est une représentation schématique d'une vue en perspective d'une portion de l'arbre du mécanisme de verrouillage faisant partie d'un moule selon un mode de réalisation de la présente invention, la portion de l'arbre portant un volant pour assurer la rotation et la translation de l'arbre et un moyeu de blocage avec une clé bloquant l'arbre en rotation et en translation,

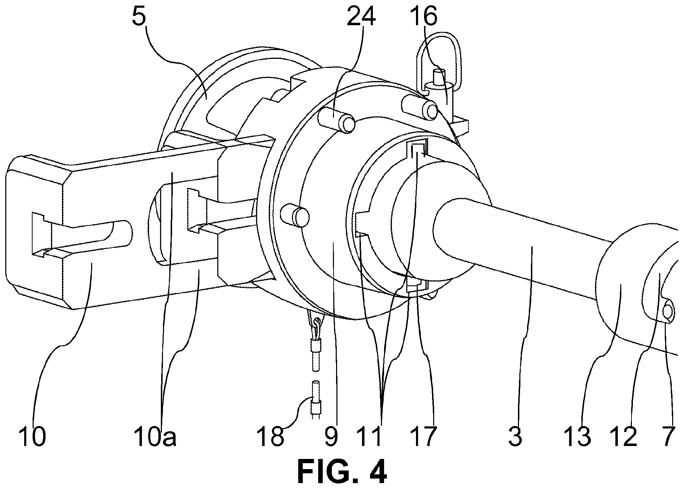

- la figure 4 est une représentation schématique d'une vue en perspective d'une portion de l'arbre du mécanisme de verrouillage faisant partie d'un moule selon un mode de réalisation de la présente invention, la portion étant montrée selon une direction opposée à celle prise pour la figure 3 en partant d'entre les parties mobile et fixe, des moyens de blocage en rotation de l'arbre portés par le moyeu de blocage étant visibles à cette figure.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

Dans ce qui va suivre, on comprend les termes « supérieur », « inférieur », et autres références à des positionnements spatiaux en référence aux composants positionnés dans leur position de fonctionnement et d'usage normal, notamment quand les parties mobile et fixe du moule sont en position verticale.

En se référant aux figures 1 à 4, la présente invention concerne un procédé de solidarisation ou désolidarisation de deux parties 1a, 1b d'un moule 1 d'injection de matière plastique. Pour ces deux parties 1a, 1b, une partie est dite mobile 1a par rapport à une partie dite fixe 1b, avec au moins un mécanisme de verrouillage 2 entre les deux parties 1a, 1b.

Aux figures 2 à 4, les deux parties 1a, 1b du moule 1 ne sont pas visibles et ont été ôtées pour laisser mieux voir le mécanisme de verrouillage. Il sera donc fait référence à la figure 1 en complément des figures 2 à 4 quand ces figures 2 à 4 seront décrites.

A la figure 1, il est montré deux mécanismes de verrouillage 2 disposés respectivement en portions haute et basse de la partie mobile 1a du moule 1 se trouvant en position sensiblement verticale comme la partie fixe 1b, ceci dans la portion médiane du moule 1 s'étendant selon une direction horizontale. Les parties 1a, 1b mobile et fixe peuvent être sensiblement rectangulaires ou carrées.

C'est la partie fixe 1b qui porte les embouts des injecteurs de matière plastique ou de commande d'ouverture et de fermeture du moule 1, une partie de ces embouts 20 étant visibles à la figure 1 sur une face de la partie fixe 1b opposée à la face en vis-à-vis de la partie mobile 1a.

Comme il est particulièrement bien visible à la figure 2, chaque mécanisme de verrouillage 2 comprend un arbre 3 de verrouillage porté par la partie mobile 1a, l'arbre 3 traversant la partie mobile 1a en pointant vers la partie fixe 1b en étant sensiblement perpendiculaire aux plans verticaux contenant respectivement la partie mobile 1a et la partie fixe 1b. L'arbre 3 de verrouillage est mobile en rotation sur lui-même autour de son axe longitudinal. L'arbre 3 de verrouillage est aussi mobile en translation en rapprochement ou en éloignement d'un axe 4 de verrouillage fixe porté par la partie fixe 1b.

L'arbre 3 et l'axe 4 sont coaxiaux en s'étendant dans une direction horizontale perpendiculaire aux parties 1a, 1b mobile et fixe verticales. Lors de la translation de l'arbre 3 en rapprochement de l'axe 4 de verrouillage et de la partie fixe 1b, l'arbre 3 et l'axe 4 entrent en contact avec insertion d'une extrémité de l'arbre 3 ou de l'axe 4 dans respectivement une extrémité en vis-à-vis de l'axe 4 ou l'arbre 3. Aux figures, c'est l'axe 4 qui pénètre dans l'arbre 3 par son extrémité en vis-à-vis de l'arbre 3 mais ceci n'est pas limitatif.

Après la translation en rapprochement de l'arbre 3 vers l'axe 4 et la partie fixe 1b du moule 1, il est effectué une rotation de l'arbre 3 entre une position de verrouillage dans laquelle une translation en éloignement est limitée pour empêcher une désolidarisation de l'arbre 3 et de l'axe 4 et une position de déverrouillage dans laquelle une translation en éloignement est libre et provoque la désolidarisation de l'arbre 3.

La translation en rapprochement s'effectue quand l'arbre 3 présente une rotation correspondant à une position de déverrouillage afin que l'arbre 3 ou l'axe 4 pénètre dans l'axe 4 ou l'arbre 3, ce qui ne serait pas possible en position de verrouillage. Ensuite, un blocage en translation de l'arbre 3 est effectué, ceci à partir de la partie mobile 1a, avantageusement sur sa face opposée à sa face en vis-à-vis de la partie fixe 1b, afin que ce blocage en translation puisse être facilement effectuée par un opérateur. L'action de verrouillage ou de déverrouillage du moule 1 est de préférence pratiquée lorsque le moule 1 est fermé pour des raisons de sécurité.

L'invention concerne un moule 1 d'injection de matière plastique en deux parties 1a, 1b avec une partie mobile 1a par rapport à une partie fixe 1b pour la mise en oeuvre d'un tel procédé. Le moule 1 présente au moins un mécanisme de verrouillage 2 et de déverrouillage, avantageusement au moins deux mécanismes de verrouillage 2 disposés respectivement au milieu de la portion supérieure et de la portion inférieure d'une face dite extérieure de la partie mobile 1a c'est-à-dire opposée à une face de la partie mobile 1a en vis-à-vis de la partie fixe 1b du moule 1.

Selon l'invention, ledit au moins un mécanisme 2, avantageusement deux mécanismes de verrouillage 2 présente un arbre 3 de verrouillage traversant la partie mobile 1a en direction de la partie fixe 1b. L'arbre 3 de verrouillage est associé à des moyens de translation et de rotation 5 portés par la partie mobile 1a.

La partie fixe 1b porte un axe 4 fixe coaxial à l'arbre 3 en pénétrant partiellement dans ou en recevant en son intérieur une extrémité de l'arbre 3 en position de verrouillage des deux parties 1a, 1b. A la figure 2, l'arbre 3 traverse la partie mobile 1a en présentant une portion d'extrémité faisant saillie sur la face de la partie mobile 1a opposée à celle en vis-à-vis de la partie fixe 1b. L'axe 4 traverse la partie fixe 1b en étant vissé sur cette partie fixe 1b par un écrou 21 et une plaquette de renfort 22 de fixation.

L'axe 4 ou l'arbre 3 porte des moyens de verrouillage 6 coopérant avec des moyens de verrouillage complémentaires 7, 8 portés par l'autre élément associé c'est-à-dire l'arbre 3 ou l'axe 4. De plus, la partie mobile 1a porte un moyeu de blocage 9, de forme sensiblement cylindrique, portant des moyens amovibles de blocage en translation et en rotation 10, 11 de l'arbre 3. Ces moyens amovibles 10, 11 seront ultérieurement plus précisément décrits. Le moyeu de blocage 9 peut être solidarisé avec la partie mobile 1a par des vis ou boulons 24 dont un seul est référencé aux figures 2 à 4.

D'une manière générale, dans une forme de réalisation de la présente invention, pour un déverrouillage, en partant d'un blocage en rotation et en translation de l'arbre 3 dans une position respectivement de verrouillage par les moyens de blocage 10, 11 portés par le moyeu de blocage 9, il est effectué un déblocage en translation de l'arbre 3 sur la partie mobile 1a.

Ce déblocage est suivi d'une translation, effectuée par des moyens de translation 5 portés par la partie mobile 1a, de l'arbre 3 en éloignement de l'axe 4 jusqu'à ce qu'une rotation, effectuée par des moyens de rotation 5 portés par la partie mobile 1a, vers une position de déverrouillage de l'arbre 3 soit permise. Ceci est possible dans une configuration spécifique des moyens de verrouillage 6 portés par l'axe 4 et des moyens de verrouillage complémentaires 7, 8 portés par l'arbre 3.

Ensuite, il est effectué une translation de l'arbre 3 en éloignement de l'axe 4, l'arbre 3 étant désolidarisé de l'axe 4. Le déverrouillage est finalisé par un blocage en translation et rotation de l'arbre 3 sur la partie mobile 1a. A cet instant, le moule 1 est déverrouillé et peut donc assurer les cycles de moulage en coopération avec une machine d'injection.

Pour un verrouillage, en partant d'un blocage en rotation et en translation de l'arbre 3 dans une position ou de déverrouillage, il est effectué un déblocage en translation de l'arbre 3 sur la partie mobile 1a. Ce déblocage permet une translation en rapprochement de l'arbre 3 vers l'axe 4 avec introduction d'une portion d'extrémité de l'arbre 3 ou de l'axe 4 respectivement dans l'axe 4 ou l'arbre 3 jusqu'à ce qu'une rotation de l'arbre 3 soit permise par une configuration spécifique des moyens de verrouillage 6 et des moyens de verrouillage complémentaires 7, 8.

Dès lors, il est possible d'effectuer une rotation de l'arbre 3 vers une position de verrouillage. Cette rotation est suivie d'une translation limitée de l'arbre 3 en éloignement de l'axe 4, l'arbre 3 étant verrouillé sur l'axe 4 et un blocage en translation de l'arbre 3 sur la partie mobile 1a étant effectué. A cet instant, le moule 1 est verrouillé et peut donc être sorti de la machine d'injection et repris à l'aide d'un pont roulant pour être déposé dans un chariot de rangement en position verticale.

Dans une forme de réalisation préférentielle de l'invention, les moyens de verrouillage 6 à 8 portés par l'axe 4 ou l'arbre 3 peuvent être sous la forme d'un téton 6 s'étendant radialement à l'axe 4 ou l'arbre 3 pénétrant soit dans une encoche 7 borgne en position de verrouillage ou soit dans une lumière 8 débouchante vers l'extrémité de l'arbre 3 ou l'axe 4 lors de la translation en rapprochement de l'arbre 3, l'encoche 7 et la lumière 8 formant les moyens de verrouillage 7, 8 complémentaires.

A la figure 2, c'est l'axe 4 qui porte le téton 6 et l'arbre 3 qui porte l'encoche 7 et la lumière 8. Ceci n'est pas limitatif et peut être inversé. La lumière 8 et l'encoche 7 peuvent être reliées entre elles par un passage 12 permettant une rotation de l'arbre 3 en fin de translation en rapprochement de l'arbre 3 par rapport à l'axe 4. Le passage 12 s'étend sensiblement transversalement à la lumière 8 et à l'encoche 7 en étant plus éloigné de l'extrémité de l'arbre 3 ou l'axe 4 que la lumière 8 et l'encoche 7. L'entrée du téton 6 dans le passage 12 correspond sensiblement à une translation maximale en rapprochement de l'arbre 3 vers l'axe 4 et la partie fixe 1b.

Quand le téton 6 est dans la lumière 8 débouchant vers l'extrémité de l'arbre 3 ou l'axe 4, à la figure 2 l'arbre 3, une translation en éloignement de l'arbre 3 vis-à-vis de l'axe 4 et de la partie fixe 1b est possible. Par contre, quand le téton 6 est dans l'encoche 7 borgne, une translation en éloignement de l'arbre 3 vis-à-vis de l'axe 4 est limitée par la profondeur de l'encoche 7. Le téton 6 arrive alors en butée avec le fond de l'encoche 7 fermant l'encoche 7 en la rendant borgne vers l'extrémité de l'arbre 3. Une désolidarisation de l'arbre 3 et de l'axe 4 dans cette position de verrouillage n'est alors pas possible.

De même, quand le téton 6 est complètement dans la lumière 8 ou l'encoche 7 borgne, il n'est pas possible de faire tourner l'arbre 3 sur lui-même, étant donné que le téton 6 bute contre les parois latérales de la lumière 8 ou de l'encoche 7. Une rotation de l'arbre 3 n'est possible que quand le téton 6 se trouve à une extrémité du passage 12 ou dans le passage 12. L'encoche 7 et la lumière 8 peuvent être positionnées en étant éloignées l'une de l'autre d'un quart de tour sur l'arbre 3 ou l'axe 4.

Comme visible à la figure 2, la lumière 8, le passage 12 et l'encoche 7 peuvent être portées par un manchon 13 de plus grand diamètre que l'arbre 3 ou l'axe 4 sur lequel le passage 12 et l'encoche 7 sont disposés. En vis-à-vis, l'axe 4 ou l'arbre 3 portant le téton 6 peut présenter une couronne 14 de plus grand diamètre venant en appui sur la face de la partie fixe 1b en vis-à-vis de la partie mobile 1a, pour permettre sa fixation à l'aide de la plaquette de renfort 22 et de l'écrou 23 La lumière 8 et l'encoche 7 s'étendent en direction axiale du manchon 13 tandis que le passage 12 s'étend sur un arc de cercle du manchon 13 en étant creusé dans le manchon 13.

Comme il est visible à la figure 3, les moyens amovibles de blocage en translation du moyeu de blocage 9 peuvent être sous la forme d'une clé 10 amovible pénétrant transversalement dans le moyeu de blocage 9 et entourant une portion de l'arbre 3. La clé 10 amovible peut présenter deux branches 10a parallèles pénétrant latéralement dans le moyeu de blocage 9 en entourant l'arbre 3. La clé 10 amovible peut aussi présenter une partie recourbée par rapport aux branches 10a parallèles, avantageusement de 90°, pour faciliter sa préhension par un opérateur.

L'arbre 3 peut présenter deux paires de saignées, chaque paire de saignées recevant une branche 10a par saignée respectivement dans la position de déverrouillage et dans la position de verrouillage. Les deux paires de saignées sont espacées comme sont espacées la lumière 8 et l'encoche 7 borgne, par exemple d'un quart de tour.

Les extrémités libres des branches 10a parallèles peuvent recevoir une goupille de sécurité 16 en position montée de la clé 10 amovible dans le moyeu de blocage 9. La goupille de sécurité 16 fait alors butée en s'opposant à une extraction de la clé 10 amovible hors du moyeu de blocage 9. Les extrémités libres des branches 10a parallèles peuvent donc être percées par des alésages alignés l'un avec l'autre pour une introduction de la goupille de sécurité 16 entre les branches 10a.

La goupille de sécurité 16 peut être solidarisée à une extrémité d'une chaînette 18 avec l'autre extrémité de la chaînette 18 attachée à un élément 18a se trouvant au voisinage du moyeu de blocage 9, par exemple solidarisé à la partie mobile 1a. Quand une telle goupille de sécurité 16 est présente, c'est le premier élément à enlever quand il est désiré enlever la clé 10 de sécurité et débloquer la translation puis la rotation de l'arbre 3.

En se référant à la figure 4, les moyens de blocage en rotation de l'arbre 3 peuvent être sous la forme d'une goupille 17 traversant l'arbre 3 dans une portion intermédiaire de l'arbre 3 se trouvant entre les parties 1a, 1b mobile et fixe, avantageusement à proximité de la partie mobile 1a. Lors d'une translation de l'arbre 3 en éloignement de l'axe 4 et de la partie fixe 1b, les deux extrémités de la goupille 17 traversant l'arbre 3 peuvent être reçues dans un logement 11 radial respectif prévu dans le moyeu de blocage 9.

Chaque extrémité de la goupille 17 traversant l'arbre 3 est alors en butée contre les parois du logement 11 associé lors d'une rotation de l'arbre 3, ce qui empêche cette rotation et la limite à la largeur du logement 11. Le moyeu de blocage 9 peut présenter quatre logements 11 associées deux à deux pour les positions de verrouillage et de déverrouillage. Les logements 11 sont diamétralement opposés deux à deux sur le moyeu de blocage 9 et une paire de logements 11 diamétralement opposés est décalée de 90° d'angle au centre du moyeu de blocage 9 avec l'autre paire de logements 11 diamétralement opposés quand la lumière 8 et l'encoche 7 sont décalées d'un quart de tour sur l'arbre 3.

La rotation et la translation de l'arbre 3 peuvent être réalisées par des moyens pneumatiques, par au moins un moteur électrique ou manuellement. Il en va de même pour les moyens de blocage en translation avec ou sans clé 10 de blocage.

Comme il peut être vu notamment à la figure 3, quand la rotation et la translation de l'arbre 3 sont réalisées manuellement, une extrémité de l'arbre 3 dépassant de la partie mobile 1a sur une face opposée à la face de la partie mobile 1a orientée vers la partie fixe 1b porte un volant 5. Ce volant 5 peut être manœuvré en rotation par un opérateur pour initier une rotation ou tiré ou poussé par l'opérateur pour une translation de l'arbre 3 en éloignement ou en rapprochement de l'axe 4. Ce volant 5 peut comporter une poignée 5a comme organe de préhension par un opérateur, l'ensemble volant 5 et poignée 5a formant ainsi une manivelle.

Par exemple, dans la forme de réalisation précédemment décrite, lors d'un déverrouillage du moule 1, la goupille de sécurité 16 est retirée, la clé 10 de verrouillage est sortie du moyeu de blocage 9 et il est appuyé, automatiquement sur l'arbre 3 ou manuellement par un opérateur sur le volant 5, pour effectuer une translation de l'arbre 3 en rapprochement de l'axe 4 et pousser la goupille 17 traversant l'arbre 3 hors de ses logements 11 associés de blocage en rotation d'une première paire de logements présents sur le moyeu de blocage 9. Il est alors effectué une rotation de l'arbre 3 dans une première direction, par exemple dans le sens des aiguilles d'une montre pour un passage 12 du téton 6 de l'encoche 7 borgne dans la lumière 8, ce qui permet ainsi de libérer la liaison des parties 1a, 1b mobile et fixe du moule 1. L'arbre 3 est alors translaté en éloignement et la goupille 17 traversant l'arbre 3 est logée dans les logements 11 de la deuxième paire. La clé 10 est réengagée et la goupille de sécurité 16 est insérée entre les branches 10a de la clé 10.

Inversement, pour verrouiller le moule 1, il convient de fermer le moule 1 et retirer la goupille de sécurité 16 avantageusement retenue par sa chaînette 18. La clé 10 est désengagée du moyeu de blocage 9 et l'arbre 3 subit une translation en rapprochement vers l'axe 4 et la partie fixe 1b du moule 1 avec extraction de la goupille 17 traversant l'arbre 3 de ses logements 11 de position déverrouillée dans le moyeu de blocage 9. Le téton 6 de l'axe 4 se trouve dans l'alignement du passage 12 entre lumière 8 et encoche 7 et peut pénétrer dans l'encoche 7 quand l'arbre 3 subit une rotation, par exemple dans le sens inverse des aiguilles d'une montre.

La solidarisation des deux parties 1a, 1b du moule 1 est alors initiée. Il est ensuite exercé une translation en éloignement de l'axe 4 et la goupille 17 traversant l'arbre 3 est insérée dans les logements 11 de position de verrouillage de la goupille 17 dans le moyeu de blocage 9. Ensuite, la clé 10 est réintroduite dans le moyeu de blocage 9 et la goupille de sécurité 16 est réinsérée entre les branches 10a de la clé 10.

Il peut être utilisé un détecteur de position ouverte et fermée en liaison avec un automate machine. Il peut aussi être utilisé un ressort de rappel pour le retour de l'arbre 3 en position verrouillée, par exemple un rappel en translation en éloignement de l'axe 4 avec blocage en translation et rotation.

## Revendications

1. Moule (1) d'injection de matière plastique en deux parties (1a, 1b) avec une partie mobile (1a) par rapport à une partie fixe (1b), le moule (1) présentant au moins un mécanisme de verrouillage (2) et de déverrouillage, **caractérisé en ce que** ledit au moins un mécanisme (2) présente un arbre (3) de verrouillage traversant la partie mobile (1a) en direction de la partie fixe (1b), l'arbre (3) de verrouillage étant associé à des moyens de translation et de rotation (5) portés par la partie mobile (1a), la partie fixe (1b) portant un axe (4) fixe coaxial à l'arbre (3) en pénétrant partiellement dans ou en recevant en son intérieur une extrémité de l'arbre (3) en position de verrouillage des deux parties (1a, 1b), l'axe (4) ou l'arbre (3) portant des moyens de verrouillage (6) coopérant avec des moyens de verrouillage complémentaires (7, 8) portés par l'arbre (3) ou l'axe (4), la partie mobile (1a) portant un moyeu de blocage (9) portant des moyens amovibles de blocage en translation et en rotation (10, 11) de l'arbre (3), les moyens amovibles de blocage en translation du moyeu de blocage (9) étant sous la forme d'une clé (10) amovible pénétrant transversalement dans le moyeu de blocage (9) et entourant une portion de l'arbre (3).

2. Moule (1) selon la revendication précédente, dans lequel les moyens de verrouillage (6 à 8) portés par l'axe (4) ou l'arbre (3) sont sous la forme d'un téton (6) s'étendant radialement à l'axe (4) ou l'arbre (3) pénétrant soit dans une encoche (7) borgne en position de verrouillage ou soit dans une lumière (8) débouchante vers l'extrémité de l'arbre (3) ou l'axe (4) lors de la translation en rapprochement de l'arbre (3), l'encoche (7) et la lumière (8) formant les moyens de verrouillage complémentaires.

3. Moule (1) selon la revendication précédente, dans lequel la lumière (8) et l'encoche (7) sont reliées entre elles par un passage (12) permettant une rotation de l'arbre (3) en fin de translation en rapprochement de l'arbre (3) par rapport à l'axe (4).

4. Moule (1) selon la revendication précédente, dans lequel la lumière (8) et l'encoche (7) sont portées par un manchon (13) de plus grand diamètre que l'arbre (3) ou l'axe (4) le portant, l'axe (4) ou l'arbre (3) portant le téton (6) présentant une couronne (14) de plus grand diamètre venant en appui sur la face de la partie fixe (1b) en vis-à-vis de la partie mobile (1a), pour permettre sa fixation à l'aide d'une plaquette de renfort (22) et d'un écrou (23).

5. Moule (1) selon l'une quelconque des revendications 1 à 4, dans lequel la clé (10) amovible présente deux branches (10a) parallèles pénétrant latéralement dans le moyeu de blocage (9) en entourant l'arbre (3), l'arbre (3) présentant deux paires de saignées, chaque paire de saignées recevant une branche (10a) par saignée respectivement dans la position de déverrouillage et dans la position de verrouillage, les extrémités libres des branches (10a) parallèles recevant une goupille de sécurité (16) en position montée de la clé (10) amovible dans le moyeu de blocage (9), la goupille de sécurité (16) faisant butée contre une extraction de la clé (10) amovible hors du moyeu de blocage (9).

6. Moule (1) selon l'une quelconque des revendications 1 à 5, dans lequel les moyens de blocage en rotation de l'arbre (3) sont sous la forme d'une goupille (17) traversant l'arbre (3), les deux extrémités de la goupille (17) traversant l'arbre (3) étant reçues dans un logement (11) radial respectif prévu dans le moyeu de blocage (9), chaque extrémité de la goupille (17) traversant l'arbre (3) étant en butée contre les parois du logement (11) associé lors d'une rotation de l'arbre (3), le moyeu de blocage (9) présentant quatre logements (11) associées deux à deux pour les positions de verrouillage et de déverrouillage.

7. Moule (1) selon l'une quelconque des revendications 1 à 6, dans lequel la rotation et la translation de l'arbre (3) sont réalisées par des moyens pneumatiques, par au moins un moteur électrique ou manuellement, et, quand la rotation et la translation de l'arbre (3) sont réalisées manuellement, une extrémité de l'arbre (3) dépassant de la partie mobile (1a) sur une face opposée à la face de la partie mobile (1a) orientée vers la partie fixe (1b) porte un volant (5) tourné par un opérateur pour initier une rotation ou tiré ou poussé par l'opérateur pour une translation de l'arbre (3) en éloignement ou en rapprochement de l'axe (4).

8. Procédé de solidarisation ou désolidarisation de deux parties (1a, 1b) d'un moule (1) d'injection de matière plastique selon la revendication 1, une partie étant mobile (1a) par rapport à une partie fixe (1b), avec au moins un mécanisme de verrouillage (2) comprenant un arbre (3) de verrouillage porté par la partie mobile (1a), l'arbre (3) étant mobile en rotation sur lui-même et en translation en rapprochement ou en éloignement d'un axe (4) de verrouillage fixe porté par la partie fixe (1b), l'arbre (3) et l'axe (4) étant coaxiaux, avec insertion d'une extrémité de l'arbre (3) ou de l'axe (4) dans respectivement une extrémité en vis-à-vis de l'axe (4) ou l'arbre (3) lors de la translation en rapprochement, la rotation de l'arbre (3) s'effectuant entre une position de verrouillage dans laquelle une translation en éloignement est limitée pour empêcher une désolidarisation de l'arbre (3) et de l'axe (4) et une position de déverrouillage dans laquelle une translation en éloignement provoque la désolidarisation de l'arbre (3), un blocage en translation de l'arbre (3) s'effectuant sur la partie mobile (1a).

9. Procédé selon la revendication précédente, dans lequel, en partant d'un blocage en rotation et en translation de l'arbre (3) dans une position respectivement de verrouillage ou de déverrouillage :
- pour un déverrouillage, il est effectué un déblocage en translation de l'arbre (3) sur la partie mobile (1a), une translation de l'arbre (3) en éloignement de l'axe (4) jusqu'à ce qu'une rotation de l'arbre (3) soit permise, cette rotation de l'arbre (3) s'effectuant vers une position de déverrouillage et une translation de l'arbre (3) en éloignement de l'axe (4), l'arbre (3) étant désolidarisé de l'axe (4) et un blocage en translation et rotation de l'arbre (3) sur la partie mobile (1a) étant effectué et,
- pour un verrouillage, il est effectué un déblocage en translation de l'arbre (3) sur la partie mobile (1a), une translation en rapprochement de l'arbre (3) vers l'axe (4) avec introduction d'une portion d'extrémité de l'arbre (3) ou de l'axe (4) respectivement dans l'axe (4) ou l'arbre (3) jusqu'à ce qu'une rotation de l'arbre (3) soit permise, une rotation de l'arbre (3) vers une position de verrouillage et une translation limitée de l'arbre (3) en éloignement de l'axe (4) étant alors effectuées, l'arbre (3) étant verrouillé sur l'axe (4) et un blocage en translation et rotation de l'arbre (3) sur la partie mobile (1a) étant effectué.

## Patentansprüche

1. Zweiteilige Kunststoffspritzgussform (1) (1a, 1b) mit einem relativ zu einem feststehenden Teil (1b) beweglichen Teil (1a), wobei die Form (1) mindestens eine Verriegelung (2) und Entriegelung aufweist, **dadurch gekennzeichnet, dass** der mindestens eine Mechanismus (2) eine Verriegelungswelle (3) aufweist, die durch das bewegliche Teil (1a) in Richtung des feststehenden Teils (1b) verläuft, wobei die Verriegelungswelle (3) mit Translations- und Rotationsmitteln verbunden ist (5) getragen von dem beweglichen Teil (1a), wobei der feststehende Teil (1b) eine feste Achse (4) trägt, die koaxial mit der Welle (3) ist, indem er ein Ende der Welle (3) teilweise durchdringt oder in seinem Inneren aufnimmt, in der Verriegelungsstellung der beiden Teile (1a, 1b) die Achse (4) oder die Welle (3) mit Verriegelungsmitteln (6) zusammenwirkt, die mit komplementären Verriegelungsmitteln (7, 8) zusammenwirken, die von der Welle (3) getragen werden oder Achse (4), wobei der bewegliche Teil (1a) eine Arretiernabe (9) trägt, die abnehmbare Mittel zum Arretieren in Translation trägt, und in Rotation (10, 11) der Welle (3), wobei die abnehmbaren Mittel zur Translationsverriegelung der Riegelnabe (9) in Form eines abnehmbaren Schlüssels (10) ausgebildet sind, der quer in die Riegelnabe (9) eindringt) und Umgeben eines Teils des Baumes (3).

2. Form (1) nach dem vorhergehenden Anspruch, bei der die von der Achse (4) oder der Welle (3) getragenen Arretiermittel (6 bis 8) als ein sich radial zur Achse (4) erstreckender Zapfen (6) ausgebildet sind oder die Welle (3) entweder in eine Sackkerbe (7) in der Verriegelungsstellung oder in einen zum Ende der Welle (3) bzw der Achse (4) hin austretenden Schlitz (8) bei der Translation zur Welle (3), wobei die Kerbe (7) und der Schlitz (8) die komplementären Verriegelungsmittel bilden.

3. Form (1) nach dem vorhergehenden Anspruch, bei der der Schlitz (8) und die Kerbe (7) durch einen Durchgang (12) verbunden sind, der eine Drehung der Welle (3) am Ende der Translation in Richtung der Welle (3) ermöglicht bezüglich der Achse (4).

4. Form (1) nach dem vorhergehenden Anspruch, bei der der Schlitz (8) und die Kerbe (7) von einer Hülse (13) mit größerem Durchmesser als die Welle (3) oder die Achse (4) getragen werden Achse (4) oder Welle (3), die den Bolzen (6) trägt, der eine Krone (14) mit größerem Durchmesser trägt, die auf der einander zugewandten Seite des feststehenden Teils (1b) des beweglichen Teils (1a) aufliegt, um seine Befestigung mit einer Verstärkungsplatte (22) und einer Mutter (23).

5. Form (1) nach einem der Ansprüche 1 bis 4, bei der der abnehmbare Schlüssel (10) zwei parallele Schenkel (10a) aufweist, die seitlich in die die Welle (3) umgebende Verriegelungsnabe (9) eindringen, die Welle (3) mit zwei Nutenpaaren, wobei jedes Nutenpaar in der Entriegelungsstellung und in der Verriegelungsstellung jeweils eine Abzweigung (10a) durch Nutung aufnimmt, wobei die freien Enden der parallelen Abzweigungen (10a) einen Sicherungsstift (16) im montierten Stellung des abziehbaren Schlüssels (10) in der Schließnabe (9), wobei der Sicherungsstift (16) gegen ein Herausziehen des abziehbaren Schlüssels (10) aus der Schließnabe (9) anschlägt.

6. Form (1) nach einem der Ansprüche 1 bis 5, bei der die Mittel zum Verhindern der Drehung der Welle (3) die Form eines Stifts (17) haben, der die Welle (3) durchquert, wobei die beiden Enden der der die Welle (3) durchsetzende Stift (17) ist in einem entsprechenden radialen Gehäuse (11) aufgenommen, das in der Sperrnabe (9) vorgesehen ist, wobei jedes Ende des Stifts (17), der die Welle (3) durchquert, an der Wände des zugehörigen Gehäuses (11) während der Drehung der Welle (3), wobei die Verriegelungsnabe (9) vier Gehäuse (11) aufweist, die zwei mal zwei für die Verriegelungs und Entriegelungspositionen zugeordnet sind.

7. Form (1) nach einem der Ansprüche 1 bis 6, bei der die Drehung und Translation der Welle (3) pneumatisch, durch mindestens einen Elektromotor oder manuell ausgeführt wird, und wenn die Drehung und die Translation der Welle (3) erfolgt manuell, wobei ein Ende der Welle (3) aus dem beweglichen Teil (1a) auf einer Seite herausragt, die der zum feststehenden Teil (1b) gerichteten Seite des beweglichen Teils (1a) gegenüberliegend ist trägt ein Handrad (5), das von einer Bedienungsperson gedreht wird, um eine Drehung einzuleiten, oder von der Bedienungsperson gezogen oder geschoben wird, um die Welle (3) von der Achse (4) weg oder hin zu verschieben.

8. Verfahren zum Verbinden oder Trennen zweier Teile (1a, 1b) einer Kunststoffspritzgussform (1) nach Anspruch 1, wobei ein Teil (1a) relativ zu einem feststehenden Teil (1b) mit mindestens einem Verriegelungsmechanismus (2) mit einer von dem beweglichen Teil (1a) getragenen Arretierwelle (3), wobei die Welle (3) in sich selbst drehend und translatorisch zu einem festen Arretierstift (4) hin oder von diesem weg bewegbar ist, der von dem festen Teil (1b), wobei die Welle (3) und der Stift (4) koaxial sind, mit Einführen eines Endes der Welle (3) oder des Stifts (4) in jeweils ein Ende, das der Achse (4) oder der Welle (3) zugewandt ist während der Translation nach innen erfolgt die Drehung der Welle (3) zwischen einer Position der Verriegelung, in der die Translation nach außen begrenzt ist, um ein Lösen der Welle (3) und der Achse (4) zu verhindern, und einer entriegelten Position, in der die Translation nach außen bewirkt ue dem Ausrücken der Welle (3) erfolgt eine Translationsverriegelung der Welle (3) am beweglichen Teil (1a).

9. Verfahren nach dem vorhergehenden Anspruch, bei dem ausgehend von einer Rotations und Translationsverriegelung der Welle (3) in eine jeweilige Verriegelungs oder Entriegelungsposition :
- zum Entriegeln erfolgt eine translatorische Freigabe der Welle (3) auf dem beweglichen Teil (1a), eine Translation der Welle (3) von der Achse (4) weg, bis 'Drehung der Welle (3) erlaubt ist , wobei diese Drehung der Welle (3) in Richtung einer Entriegelungsposition und einer Translation der Welle (3) von der Achse (4) weg bewirkt wird, wobei die Welle (3) von der Achse (4) getrennt wird und eine Translationsverriegelung und eine Drehung der Welle (3) an dem beweglichen Teil (1a) wird durchgeführt und,
- zum Verriegeln wird die Translation der Welle (3) auf dem beweglichen Teil (1a) freigegeben, eine Translation bei Annäherung der Welle (3) in Richtung der Achse (4) mit Einführung eines Endabschnitts der Welle (3) oder der Achse (4) bzw in der Achse (4) oder der Welle (3), bis eine Drehung der Welle (3) erlaubt ist, eine Drehung der Welle (3) in Richtung einer Sperrposition und eine begrenzte Translation der Welle (3) weg von der Achse (4) dann durchgeführt wird, wobei die Welle (3) auf der Achse (4) arretiert wird und eine Translations- und Rotationssperre der Welle (3) auf dem beweglichen Teil (1a) durchgeführt werden.

## Claims

1. Two-part plastic injection mold (1) (1a, 1b) with a movable part (1a) relative to a fixed part (1b), the mold (1) having at least one locking mechanism (2) and unlocking, **characterized in that** said at least one mechanism (2) has a locking shaft (3) passing through the movable part (1a) in the direction of the fixed part (1b), the locking shaft (3) being associated with translation and rotation means (5) carried by the movable part (1a), the fixed part (1b) carrying a fixed axis (4) coaxial with the shaft (3) while partially penetrating into or receiving in its interior one end of the shaft (3) in the locking position of the two parts (1a, 1b), the axis (4) or the shaft (3) carrying locking means (6) cooperating with locking means additional locking (7, 8) carried by the shaft (3) or the axis (4), the movable part (1a) carrying a locking hub (9) carrying removable locking means in translation and in rotation (10, 11) of the shaft (3), the removable means for locking in translation of the locking hub (9) being in the form of a removable key (10) penetrating transversely into the locking hub (9) and surrounding a portion of the tree (3).

2. Mold (1) according to the preceding claim, in which the locking means (6 to 8) carried by the axis (4) or the shaft (3) are in the form of a stud (6) extending radially to the axis (4) or the shaft (3) entering either into a blind notch (7) in the locking position or into a slot (8) emerging towards the end of the shaft (3) or the axis (4) during the translation towards the shaft (3), the notch (7) and the slot (8) forming the complementary locking means.

3. Mold (1) according to the preceding claim, in which the slot (8) and the notch (7) are interconnected by a passage (12) allowing rotation of the shaft (3) at the end of translation towards the shaft (3) with respect to the axis (4).

4. Mold (1) according to the preceding claim, in which the slot (8) and the notch (7) are carried by a sleeve (13) of larger diameter than the shaft (3) or the axis (4) bearing, the axis (4) or the shaft (3) carrying the stud (6) having a crown (14) of larger diameter bearing on the face of the fixed part (1b) facing each other of the movable part (1a), to allow its fixing using a reinforcing plate (22) and a nut (23).

5. Mold (1) according to any one of claims 1 to 4, in which the removable key (10) has two parallel branches (10a) penetrating laterally into the locking hub (9) surrounding the shaft (3), the shaft (3) having two pairs of grooves, each pair of grooves receiving a branch (10a) by grooving respectively in the unlocking position and in the locking position, the free ends of the parallel branches (10a) receiving a safety pin (16) in the mounted position of the removable key (10) in the locking hub (9), the safety pin (16) abutting against an extraction of the removable key (10) from the locking hub (9).

6. Mold (1) according to any one of claims 1 to 5, in which the means for preventing rotation of the shaft (3) are in the form of a pin (17) passing through the shaft (3), the two ends of the pin (17) passing through the shaft (3) being received in a respective radial housing (11) provided in the locking hub (9), each end of the pin (17) passing through the shaft (3) being in abutment against the walls of the associated housing (11) during rotation of the shaft (3), the locking hub (9) having four housings (11) associated two by two for the locking and unlocking positions.

7. A mold (1) according to any one of claims 1 to 6, in which the rotation and translation of the shaft (3) are carried out by pneumatic means, by at least one electric motor or manually, and, when the rotation and the translation of the shaft (3) are carried out manually, one end of the shaft (3) projecting from the movable part (1a) on a face opposite to the face of the movable part (1a) oriented towards the fixed part (1b) carries a handwheel (5) turned by an operator to initiate a rotation or pulled or pushed by the operator for a translation of the shaft (3) away from or towards the axis (4).

8. A method of joining or separating two parts (1a, 1b) of a plastic injection mold (1) according to claim 1, one part being movable (1a) relative to a fixed part (1b), with at at least one locking mechanism (2) comprising a locking shaft (3) carried by the movable part (1a), the shaft (3) being movable in rotation on itself and in translation towards or away from a fixed locking pin (4) carried by the fixed part (1b), the shaft (3) and the pin (4) being coaxial, with insertion of one end of the shaft (3) or of the pin (4) in respectively one end facing the axis (4) or the shaft (3) during the inward translation, the rotation of the shaft (3) taking place between a position of locking in which outward translation is limited to prevent disengagement of the shaft (3) and the axis (4) and an unlocked position in which outward translation causes the disengagement of the shaft (3), a locking in translation of the shaft (3) taking place on the movable part (1a).

9. Method according to the preceding claim, in which, starting from a locking in rotation and in translation of the shaft (3) in a respectively locking or unlocking position :
- for unlocking, it is performed a translation release of the shaft (3) on the moving part (1a), a translation of the shaft (3) away from the axis (4) until rotation of the shaft (3) is allowed, this rotation of the shaft (3) being effected towards an unlocking position and a translation of the shaft (3) away from the axis (4), the shaft (3) being disconnected from the axis (4) and a locking in translation and rotation of the shaft (3) on the moving part (1a) being performed and,
- for locking, it is released in translation of the shaft (3) on the movable part (1a), a translation in approach of the shaft (3) towards the axis (4) with the introduction of a end portion of the shaft (3) or of the axis (4) respectively in the axis (4) or the shaft (3) until a rotation of the shaft (3) is allowed, a rotation of the shaft (3) towards a locking position and a limited translation of the shaft (3) away from the axis (4) then being performed, the shaft (3) being locked on the axis (4) and a locking in translation and rotation of the shaft (3) on the movable part (1a) being performed.
